Europäisches Patentamt

**European Patent Office**

**Office européen des brevets**

(11) Numéro de publication: **0 015 182**

**A1**

(12) **DEMANDE DE BREVET EUROPEEN**

(21) Numéro de dépôt: **80400166.7**

(22) Date de dépôt: **04.02.80**

(51) Int. Cl.³: **G 06 F 15/353**

(30) Priorité: **05.02.79 FR 7902845**

(43) Date de publication de la demande:
**03.09.80 Bulletin 80/18**

(84) Etats Contractants Désignés:
**BE DE GB IT SE**

(71) Demandeur: **LE MATERIEL TELEPHONIQUE THOMSON-CSF**
**146 Boulevard de Valmy**
**F-92707 Colombes Cedex(FR)**

(72) Inventeur: **Houdard, Jean-Pierre**
**"THOMSON-CSF" - SCPI 173 Boulevard Haussmann**
**F-75360 Paris Cedex 08(FR)**

(72) Inventeur: **Julie, Jean-Jacques**
**"THOMSON-CSF" - SCPI 173 Boulevard Haussmann**
**F-75360 Paris Cedex 08(FR)**

(72) Inventeur: **Leoni, Bernard Georges**
**"THOMSON-CSF" -SCPI 173 Boulevard Haussmann**
**F-75360 Paris Cedex 08(FR)**

(74) Mandataire: **Chaverneff, Vladimir et al,**
**"THOMSON-CSF" - SCPI 173 Boulevard Haussmann**
**F-75360 Paris Cedex 08(FR)**

(54) **Réseau numérique interpolateur pour traitement en temps partagé sur plusieurs canaux.**

(57) Le réseau de l'invention comprend une mémoire vive (M), K unités arithmétiques ($U_0$ à $U_{k-1}$) disposées en parallèle, chacune coopérant avec une mémoire morte ($H_0$ à $H_{k-1}$) stockant les coefficients de pondération. Les échantillons à interpoler sont inscrits dans la mémoire morte à chaque fois à la place de l'échantillon le plus ancien, la lecture des valeurs discrètes retardées se faisant en commençant par l'échantillon venant d'être inscrit et en progressant par ordre croissant d'ancienneté.

Application : traitement en temps partégé de signaux en téléphonie MIC.

Fig 1

1

# RÉSEAU NUMÉRIQUE INTERPOLATEUR POUR TRAITEMENT EN TEMPS PARTAGE SUR PLUSIEURS CANAUX

La présente invention se rapporte à un réseau numérique interpolateur pour le traitement en temps partagé de signaux numériques se présentant sur plusieurs canaux de transmission.

Lorsque des signaux analogiques doivent être transmis sous forme numérique, on les échantillonne, pour des raisons économiques, de préférence à la fréquence d'échantillonnage la plus basse possible qui est égale, conformément au théorème de Shannon, à deux fois la fréquence supérieure du signal à transmettre. D'autre part, pour obtenir la meilleure qualité possible au niveau du traitement des signaux échantillonnés, il faudrait que la fréquence d'échantillonnage soit la plus grande possible par rapport à ladite fréquence supérieure du signal à transmettre.

Pour concilier ces deux exigences contradictoires, on transmet des signaux échantillonnés à environ deux fois leur fréquence supérieure, et à la réception on utilise un réseau interpolateur calculant les échantillons intermédiaires des échantillons reçus.

Les réseaux interpolateurs actuellement utilisés ne permettent pas, même à l'aide d'unités arithmétiques très rapides, d'augmenter considérablement le nombre d'échantillons intermédiaires, en particulier pour un traitement en temps partagé sur plusieurs canaux. En outre, ces réseaux interpolateurs connus ont un encombrement très important.

La présente invention a pour objet un réseau numérique interpolateur pouvant fournir un nombre même très élevé d'échantillons intermédiaires sans que l'on ait à augmenter la vitesse de calcul des unités arithmétiques utilisées.

La présente invention a également pour objet un réseau numérique interpolateur ne comportant en général qu'une seule mémoire de valeurs discrètes retardées quel que soit le nombre d'interpolateurs utilisés, un tel réseau pouvant fonctionner en temps partagé sur plusieurs canaux et ayant un encombrement le plus faible possible.

Le réseau numérique interpolateur conforme à la présente

2

invention fonctionnant en temps partagé sur I canaux de transmission, I étant un nombre entier supérieur ou égal à 1, comporte : une mémoire vive pour le stockage de P valeurs discrètes retardées pour chacun des I canaux ; K mémoires mortes pour le stockage de P coefficients de pondération chacune ; K unités arithmétiques disposées en parallèle pour le calcul des échantillons interpolés, K étant un nombre entier supérieur ou égal à 1 ; un premier compteur modulo I pour l'adressage de chacun des I canaux ; un second compteur modulo P pour l'adressage des P valeurs discrètes retardées ; un troisième compteur modulo P pour l'adressage des P coefficients de pondération.

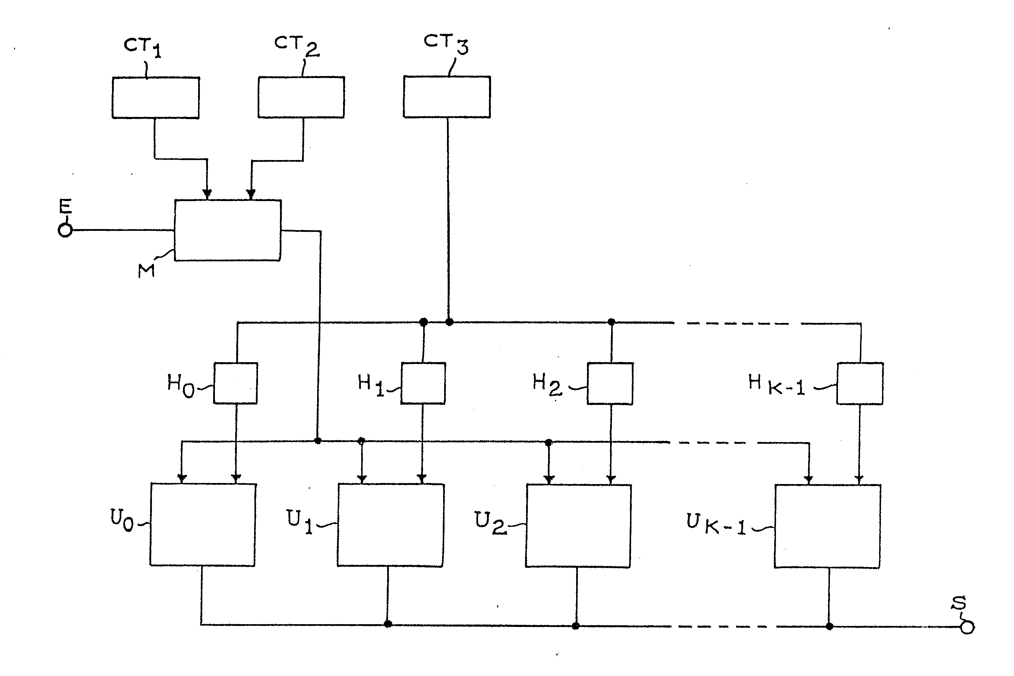

La présente invention sera mieux comprise à l'aide de la description détaillée d'un mode de réalisation pris comme exemple non limitatif et illustré par le dessin annexé dont la figure unique est un bloc-diagramme dudit mode de réalisation.

Le réseau numérique interpolateur représenté sur la figure unique est branché entre une borne d'entrée E et une borne de sortie S.

La borne d'entrée E à laquelle on applique le signal numérique à interpoler est reliée à une mémoire vive M organisée selon I pages correspondant chacune à un canal de transmission et pouvant contenir chacune au moins P mots de $\underline{r}$ éléments binaires chacun. Dans le cas de l'application à la téléphonie MIC, I = 32, r = 16 et P = 3 au moins. Ces valeurs ne sont toutefois données qu'à titre d'exemple, et peuvent être différentes pour d'autres applications.

Les I pages de la mémoire vive M sont adressées par un premier compteur $CT_1$ modulo I, et les P mots de chacune des I pages de la mémoire M sont adressés par un second compteur $CT_2$ de modulo P.

La sortie de la mémoire vive M est reliée simultanément aux entrées d'opérande de K unités arithmétiques disposées en parallèle et respectivement référencées $U_0$ à $U_{K-1}$, le nombre K étant choisi en fonction du nombre d'échantillons interpolés que l'on veut obtenir. Les unités arithmétiques $U_0$ à $U_{K-1}$ sont des multiplieurs-accumulateurs à traitement parallèle de constitution connue en soi et de type le plus performant possible, par exemple le circuit intégré TRW n° TDC 1010 J.

L'entrée d'opérateur de chaque unité arithmétique $U_0$ à $U_{K-1}$ est reliée à une mémoire morte correspondante, les mémoires mortes étant respectivement référencées $H_0$ à $H_{K-1}$, et étant adressées par un compteur commun $CT_3$ de modulo P. Chaque mémoire morte $H_0$ à $H_{K-1}$ peut contenir au moins P mots de s éléments binaires (s = 16 par exemple) représentant les différents coefficients de pondération par lesquels doivent être multipliées les différentes valeurs retardées lues dans la mémoire vive M.

Les sorties des K unités arithmétiques $U_0$ à $U_{K-1}$ sont toutes reliées à la borne de sortie commune S sur laquelle apparaissent les différentes composantes du signal numérique interpolé.

On va maintenant expliquer le fonctionnement du réseau numérique interpolateur représenté sur le dessin, dans le cas simplifié où P = 4, étant bien entendu que P peut avoir une valeur entière quelconque et que les explications ci-dessous restent valables quelle que soit la valeur de P.

Soit T la période d'échantillonnage des signaux $x_i$ (nT) transmis par chacun des I canaux à traiter. Le réseau numérique interpolateur fonctionnant en temps partagé sur I canaux doit donc synthétiser les K échantillons de sortie $y^k_i$ (nT) de chaque canal en un temps inférieur à $\frac{T}{I.K}$ secondes. La commutation d'un canal de rang i au canal suivant de rang i+1 s'effectue toutes les $\frac{T}{I}$ secondes. Dans le cas de la téléphonie MIC, on a I = 32 comme précisé ci-dessus et T = 125 µs ; la commutation d'un canal au suivant s'effectue donc toutes les 3,9 µs environ, et les K échantillons de sortie doivent être synthétisés en moins de 3,9 µs.

Supposons que l'on se place juste avant l'arrivée à l'entrée E d'un échantillon $x_o$ [(n+1)T] sur le canal 0, c'est-à-dire que le compteur $CT_1$ est à l'adresse 0. Supposons également que le compteur $CT_2$ est à l'adresse 3, le compteur $CT_3$ étant à l'adresse 0, car comme expliqué ci-dessous, ce compteur est remis à zéro juste avant l'arrivée d'un échantillon. A la page 0 de la mémoire M se trouvent alors, aux adresses 0, 1, 2 et 3 respectivement, les valeurs discrètes retardées suivantes :

$$x_o [nT], \quad x_o [(n-1)T], \quad x_o [(n-2)T] \quad \text{et} \quad x_o [(n-3)T].$$

4

Lorsque $x_o$ [(n+1)T] se présente, un ordre d'écriture, produit de façon connue en soi par des moyens non représentés, fait mémoriser $x_o$ [(n+1)T] à l'adresse 3 de la page 0 de la mémoire M, c'est-à-dire à la place de l'échantillon le plus ancien $x_o$ [(n-3)T].

Ensuite, la mémoire M est commandée en mode lecture, également grâce à des moyens connus en soi et non représentés, la lecture s'effectuant en commençant par l'échantillon venant d'être écrit et en progressant par ordre croissant d'ancienneté des échantillons mémorisés, c'est-à-dire de $x_o$ [(n+1)T] à $x_o$ [(n-2)T], ces échantillons étant envoyés aux K unités arithmétiques simultanément.

Au fur et à mesure de leur arrivée dans les différentes unités arithmétiques, les échantillons y sont pondérés par les coefficients de pondération $A^k_p$ qui se présentent toujours dans le même ordre depuis la mémoire morte correspondante, c'est-à-dire, pour chaque unité arithmétique, depuis p = 0 jusqu'à p = P-1. Dans le cas présent P = 4, et il y a donc quatre coefficients de pondération affectés chacun à un échantillon lu dans la mémoire vive M, le coefficient $A^k_o$ étant affecté à l'échantillon venant d'être écrit et lu en premier, et ainsi de suite jusqu'au coefficient $A^k_3$ qui est affecté à l'échantillon lu en dernier, c'est-à-dire l'échantillon $x_o$ [(n-2)T].

Chaque unité arithmétique multiplie les différents échantillons lus par les coefficients de pondération correspondants, puis fait la somme des P résultats de multiplication. Chacune des K sommes est alors disponible dans le registre de sortie de l'unité arithmétique correspondante, des moyens connus en soi et non représentés permettant d'extraire à des instants appropriés lesdites sommes des registres de sortie précités.

$\frac{T}{I}$ seconde après l'arrivée de $x_o$ [(n+1)T], le compteur $CT_1$ s'incrémente d'un pas et affiche l'adresse 1. Le compteur $CT_2$ s'incrémente également d'un pas et affiche l'adresse 3 : en effet, la dernière valeur lue à la page 0 est $x_o$ [(n-2)T] qui se trouve à l'adresse 2. En même temps $x_1$ [(n+1)T] se présente à l'entrée E.

A la page 1 de la mémoire M on trouve juste avant l'arrivée de $x_1$ [(n+1)T], aux adresses 0 à 3 respectivement :

$x_1$ [nT], $x_1$ [(n-1)T], $x_1$ [(n-2)T] et $x_1$ [(n-3)T].

5

Dès que $x_1$ [(n+1)T] se présente à l'entrée E, un ordre d'écriture, produit de même façon que précédemment, fait mémoriser cet échantillon à l'adresse 3 de la page 1 de la mémoire M. Ensuite, le traitement décrit ci-dessus pour la page 0 se répète pour la page 1 de la mémoire M, puis pour les pages suivantes, et ce jusqu'à la page I-1 à la fin de la lecture de laquelle le compteur $CT_2$ n'est pas incrémenté. En effet, $\frac{T}{I}$ seconde après l'arrivée de l'échantillon $x_{I-1}$ [(n+1)T] , juste après l'obtention des K échantillons de sortie synthétisés par le réseau numérique interpolateur, le compteur $CT_1$ s'incrémente d'un pas et passe de l'adresse I-1 à l'adresse 0, mais le compteur $CT_2$ reste positionné à l'adresse 2, le compteur $CT_3$ étant bien entendu remis à l'état initial, c'est-à-dire à l'adresse 0 commune aux premiers coefficients de pondération $A^k_o$ .

On trouve alors à la page 0 de la mémoire M, aux adresses 0, 1, 2 et 3 respectivement, les échantillons suivants :

$$x_o [nT] , x_o [(n-1)T] , x_o [(n-2)T] \text{ et } x_o [(n+1)T] .$$

Dès que l'échantillon $x_o$ [(n+2)T] se présente à l'entrée E, un ordre d'écriture le fait inscrire à l'adresse 2 de la page 0 de la mémoire M, adresse à laquelle s'est arrêté le compteur $CT_2$ et où se trouvait donc précédemment $x_o$ [(n-2)T] dont $x_o$ [(n+2)T] prend la place. La page 0 de la mémoire M restant sélectionnée, un ordre de lecture, produit de la même façon que précédemment, commande la lecture des valeurs discrètes retardées et leur pondération par les coefficients appropriés dans les unités arithmétiques correspondantes, et le processus décrit ci-dessus se répète pour les échantillons $x_o$ [(n+2)T] à $x_{I-1}$ [(n+2)T] .

De manière générale, le compteur $CT_1$ modulo I est incrémenté toutes les $\frac{T}{I}$ secondes, le compteur $CT_2$ est incrémenté toutes les $\frac{T}{I}$ secondes sauf lorsque l'on passe du canal I-1 (dernier canal) au canal 0 (premier canal), et le compteur $CT_3$ est remis à zéro toutes les $\frac{T}{I}$ secondes.

On remarquera que si l'on veut transmettre à la sortie S les échantillons d'entrée sans modification de leur amplitude, on utilise une unité arithmétique, par exemple $U_0$, dont la fonction de transfert est équivalente à un retard pur, ce retard étant égal

6

à $\frac{T}{I}$, la mémoire morte correspondante $H_0$ pouvant alors être supprimée.

On remarquera également que si la capacité de la mémoire vive M n'est pas suffisante pour certaines applications, on peut lui adjoindre en série une ou plusieurs autres mémoires vives.

En conclusion, le réseau numérique interpolateur conforme à la présente invention permet d'utiliser, pour un traitement en temps partagé sur un grand nombre de canaux, autant d'unités arithmétiques $U_k$ avec leurs mémoires mortes $H_k$ qu'il est nécessaire pratiquement sans limitation. Il est donc possible d'augmenter la fréquence d'échantillonnage du signal entrant à une valeur très élevée sans accroître la vitesse de calcul des unités arithmétiques utilisées. La mémoire vive M des valeurs discrètes retardées est unique dans la plupart des cas, indépendamment du nombre d'unités arithmétiques utilisées, ce qui fait que l'encombrement du réseau numérique interpolateur est nettement plus faible que celui des réseaux actuellement utilisés.

7

## REVENDICATIONS

1. Réseau numérique interpolateur pour le traitement en temps partagé de signaux numériques se présentant sur I canaux de transmission, caractérisé par le fait qu'il comporte : une mémoire vive pour le stockage de P valeurs discrètes retardées pour chacun des I canaux (I étant un nombre entier supérieur ou égal à 1) ; K mémoires mortes pour le stockage de P coefficients de pondération chacune ; K unités arithmétiques disposées en parallèle pour le calcul des échantillons interpolés, K étant un nombre entier supérieur ou égal à 1 ; un premier compteur modulo I pour l'adressage de chacun des I canaux ; un second compteur modulo P pour l'adressage des P valeurs discrètes retardées ; et un troisième compteur modulo P pour l'adressage des P coefficients de pondération.

2. Réseau numérique interpolateur selon la revendication 1, caractérisé par le fait que la fonction de transfert de l'une des unités arithmétiques est équivalente à un retard pur.

3. Réseau numérique interpolateur selon l'une quelconque des revendications 1 ou 2, caractérisé par le fait que la période d'échantillonnage des signaux à interpoler étant T, ledit premier compteur est incrémenté toutes les $\frac{T}{I}$ secondes, que ledit deuxième compteur est incrémenté toutes les $\frac{T}{I}$ secondes sauf lorsque l'on passe du canal I-1 (dernier canal) au canal O (premier canal), et que ledit troisième compteur est remis à zéro toutes les $\frac{T}{I}$ secondes.

0015182

Office européen
des brevets

RAPPORT DE RECHERCHE EUROPEENNE

Numero de la demande

EP 80 40 0166

| Catégorie | Citation du document avec indication, en cas de besoin, des parties pertinentes | Revendication concernée | CLASSEMENT DE LA DEMANDE (Int. Cl. 3) |
|---|---|---|---|
| | **DOCUMENTS CONSIDERES COMME PERTINENTS** | | |
| | 1968 IEEE INTERNATIONAL CONVENTION DIGEST, Synopses of papers presented at the 1968 IEEE International Convention, 18-21 mars 1968, page 213 New York, U.S.A. L.B. JACKSON: "Implementation of digital filters"  * Page 213, colonne de gauche, point 4; colonne de droite, alinéa 2 *  -- | 1 | G 06 F 15/353 |
| | FR - A - 2 229 336 (T.R.T.)  * Page 1, lignes 1-8; page 2, lignes 28-32; page 3, ligne 34 - page 4, ligne 15; page 6, lignes 9-11 *  -- | 1,3 | **DOMAINES TECHNIQUES RECHERCHES (Int. Cl. 3)**  G 06 F 15/353 H 04 L 25/03 |
| A | IEEE TRANSACTIONS ON COMPUTERS, vol. C-22, no. 4, avril 1973, pages 388-396 New York, U.S.A. A.E. DURLING: "A unified method for the reconstruction of sampled data"  * Page 388, colonne de droite, lignes 2-7; page 389, figure 2 *  ---- | 1 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cite pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 22-04-1980 | LAMADIE |

OEB Form 1503.1 06.78